# EUROPEAN PATENT SPECIFICATION

(11) **EP 3 525 912 B1**
(45) Date of publication and mention of the grant of the patent: **02.04.2025**
(21) Application number: 17780902.7
(22) Date of filing: 05.10.2017
(51) Int. Cl.: B01D 46/24, B01D 46/50

(54) **A FILTER CARTRIDGE FOR A COMPRESSOR OR VACUUM PUMP**
FILTERPATRONE FÜR EINEN VERDICHTER ODER EINE VAKUUMPUMPE
CARTOUCHE DE FILTRE POUR UN COMPRESSEUR OU UNE POMPE À VIDE

(30) Priority: 12.10.2016 US 201662406983 P; 13.07.2017 BE 201705497
(43) Date of publication of application: 21.08.2019
(73) Proprietor: Atlas Copco Airpower, Naamloze Vennootschap, 2610 Wilrijk (BE)
(72) Inventor: MOENS, Wim, 2610 Wilrijk (BE)
(74) Representative: Van Minnebruggen, Ewan Benito Agnes
(86) International application number: PCT/IB2017/056152
(87) International publication number: WO 2018/069796

(56) References cited:
- EP-A1- 1 569 735
- DE-C1- 3 918 342
- US-A- 3 933 643
- US-A1- 2010 205 798
- US-A1- 2010 314 333
- US-B1- 8 182 682

## Description

This invention relates to a filter cartridge for removing liquid from a gas stream, said filter cartridge comprising: a filter medium retained between two end caps, whereby one of said end caps comprises a gas inlet; said filter medium being mounted in a rolled-up manner, such that the filter medium shows a multi-layered structure; and an electrically conductive layer provided onto said filter medium.

Filters comprising an electrically conductive layer are known to be used within air filtering units, wherein such conductive layers are being electrically charged such that dust particles are more efficiently filtrated. One example can be found in US 2009/241,777 A, having MITSUBISHI CHEM CORP as applicant. Another example is described in US3933643 A.

Even though such a filter might improve the efficiency of retaining dust particles, it would not be suitable for gas filtration within a compressor or vacuum pump because, due to the harsh environment to which it is subjected, it would not be able to reduce the risk of occurring sparks and even ignition within the filter medium, due to static energy being built up therein.

One of the drawbacks of the above identified filter is the fact that an electrical charge is maintained within the two electrically conductive layers by creating an electrical field there between, facilitating even more a possible ignition of the filter medium.

Due to the typical volume and the speed of the gas flowing through a compressor, such a situation could easily become hazardous, since even the smallest spark can generate a fire which can lead to even an explosion.

Yet another drawback of the above identified filter is the complex manufacturing method in which the fiber layers are first glued or bound to each other and afterwards the support layers are treated and attached to the structure. Such a manufacturing method is not only costly and time consuming but considering the speed of compressed gas and the volume thereof, such a filter structure can prove not to be sufficiently strong and a failure of the filter can occur.

Taking the above drawbacks into account it is an object of the present invention to provide a filter cartridge for removing liquid from a gas stream, said filter cartridge being suitable for use in a compressor or a vacuum pump.

It is another object of the present invention to provide a filter cartridge reducing or even eliminating the risks of sparks being created within the filter medium while at the same time maintaining a very high efficiency of the filtering process.

It is yet another object of the present invention to maintain a very efficient discharge of static electricity possibly build up in any part of the filter medium.

It is another object of the present invention to provide a very easy to manufacture and robust filter cartridge.

The present invention solves at least one of the above and/or other problems by providing a filter cartridge for removing liquid from a gas stream according to the appended set of claims.

Because the electrically conductive layer is attached onto the filter medium and because said filter medium is being mounted in a rolled-up manner, a very robust filter cartridge is obtained through a very easy mounting technique.

By attaching the electrically conductive layer onto the filter medium such that it is interposed between two adjacent layers of filter medium, the static energy possibly built up within the filter medium is efficiently conducted towards the grounding, irrespective of the depth where such static energy is accumulated.

Tests have shown that a simple grounding of the filter cartridge without the inclusion of the electrically conductive layer is not enough for reducing the risks of sparks appearing within the filter medium, but because the filter cartridge according to the present invention uses both features: of such grounding and the inclusion of the electrically conductive layer, possible static energy built up within the filter medium is discharged immediately, and sparks can no longer be encountered.

Furthermore, since the electrically conductive layer is attached onto the filter medium such that it is interposed between two adjacent layers of filter medium, a stronger and more durable filter cartridge is achieved, suitable for applications requiring very high pressures. Because the durability of the filter cartridge is increased, the maintenance costs are reduced, since a filter cartridge according to the present invention would require a less frequent maintenance intervention.

The present invention is further directed to a filter as defined in claim 8.

The present invention is further directed to a method for manufacturing a filter cartridge as defined in claims to 11.

In the context of the present invention it should be understood that the benefits presented above with respect to the filter cartridge are also valid for the filter and also for the method for manufacturing a filter cartridge.

The present invention can be used for filtering oil from compressed air in an oil injected compressor system.

With the intention of better showing the characteristics of the invention, some preferred configurations according to the present invention are described hereinafter by way of an example, without any limiting nature, with reference to the accompanying drawings, wherein:
figure 1 schematically represents a compressed air system according to an embodiment of the present invention;
figure 2 schematically represents a filter cartridge according to an embodiment of the present invention;
figure 3 schematically represents a cross section through a filter housing comprising a filter cartridge according to an embodiment of the present invention;
figure 4 schematically represents the mounting of the electrically conductive layer onto the filter medium according to an embodiment of the present invention;
figures 5 to 9 schematically represent the mounting of the electrically conductive layer onto the filter medium according to other embodiments of the present invention.

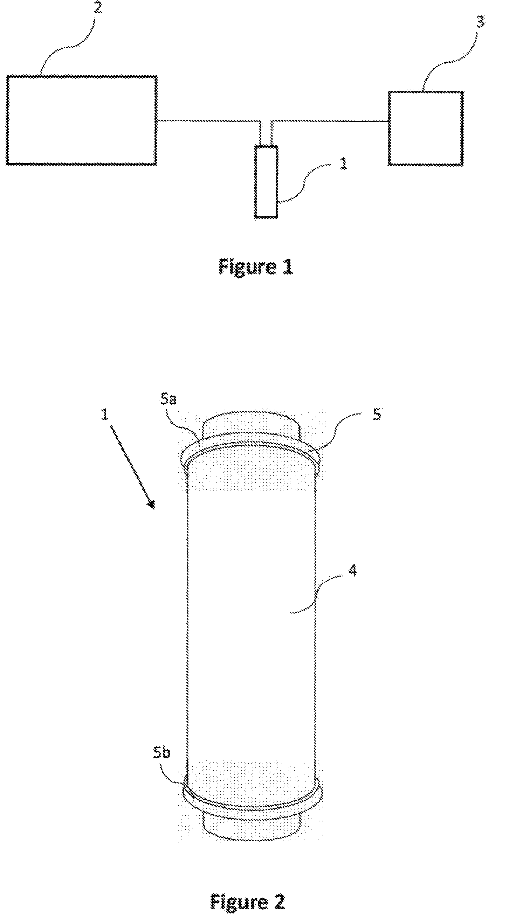

Figure 1 illustrates a filter cartridge 1 according to the present invention, said filter cartridge 1 being mounted on a flow conduit between a compressor and a user's network 3.

If such a filter cartridge 1 would be mounted within a vacuum pump, said filter cartridge 1 would be typically mounted on a flow conduit between the vacuum pump and the atmosphere.

Accordingly, the filter cartridge 1 is preferably mounted on the outlet flow conduit of a compressor or vacuum pump 2, such that the compressed air is first filtrated and only afterwards is guided towards the user's network 3 or evacuated to the atmosphere.

As illustrated in figure 2, the filter cartridge 1 comprises a filter medium 4 retained between two end caps 5. The two end caps 5 having the property of securing the filter medium 4 in a desired position.

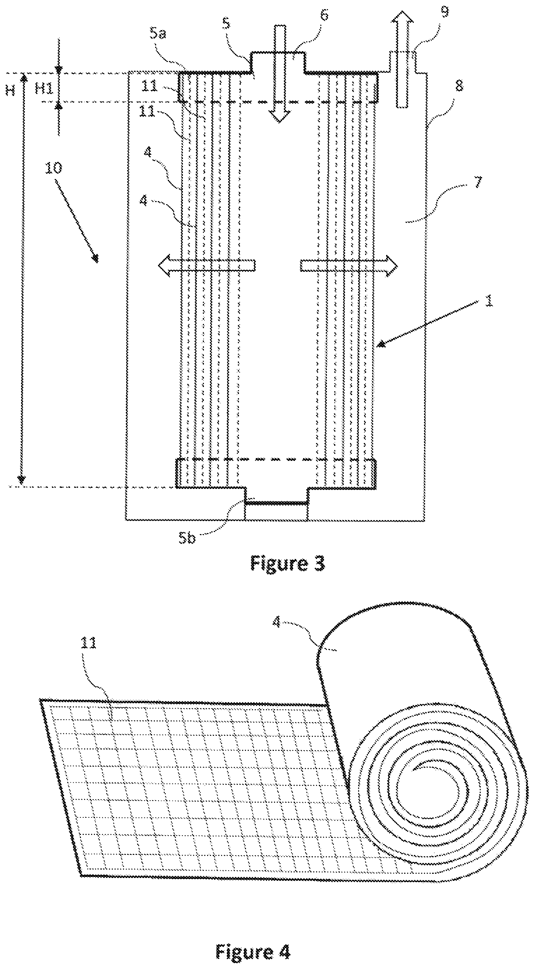

Preferably, as can be seen in figure 3, one of said two end caps 5a or 5b comprises a gas inlet 6, said gas inlet 6 receiving the gas flow coming from the compressor or vacuum pump 2.

In figure 3 it can be seen that the end cap comprising the gas inlet 6 is chosen to be Sa, but in the context of the present invention it should be understood that the filter cartridge 1 can also be rotated, case in which end cap 5b will comprise the gas inlet 6.

It is further a possibility for said gas inlet 6 to be designed through and cap 5b of the layout illustrated in figure 3.

Typically, the filter cartridge 1 is received within a housing 8 defining an internal space 7, said housing further comprising a gas outlet 9.

Said gas outlet 9 being preferably positioned within the internal space 7, between the cartridge 1 and a wall of the housing 8, whereby the gas inlet 6 is in fluid communication with said gas outlet 9.

In the context of the present invention, a filter 10 should be understood as the housing 8 comprising the filter cartridge 1, a gas inlet 6 and a gas outlet 9, as illustrated in figure 3.

The gas outlet 9 can be positioned at the level of any of the end caps 5 or can even be positioned on the housing 8.

Preferably, but not limiting thereto, for a more efficient filtration, the gas outlet 9 is designed in the top section or relatively close to the top section of the filter 10. Such top section being understood as opposed to the orientation of the gravitational force, when such a filter 10 is mounted within a compressor or vacuum pump 2 and in normal operational conditions.

The gas outlet 9 is being connectable through a flow conduit to the user's network 3 or to the atmosphere, depending if the filter cartridge 1 is mounted within a compressor or a vacuum pump.

Further, said housing typically 8 comprises an opening closed off by the end cap 5a or 5b comprising said gas inlet 6.

Accordingly, gas flowing from a compressor or vacuum pump is passing through the gas inlet 6, through said filter medium 4 and further through said gas outlet 9. Consequently, only clean filtered gas is reaching the user's network 3 or the atmosphere and any liquid or possibly solid impurities are retained within the filter cartridge 1.

The filter medium 4 is mounted in a rolled-up manner, as shown in figure 4. By applying such a technique, the filter cartridge 1 according to the present invention shows a multi-layered structure when mounted and retained within said two end caps 5, increasing the efficiency of the filtration process.

In the context of the present invention, rolled-up should be understood as bringing a relatively rectangular or square shaped piece of filter medium 4 within a relatively cylindrical structure having a layer of filter medium 4 on top of another layer of filter medium 4.

Such a relatively cylindrical structure being created by taking a first edge of said relatively rectangular or square shaped piece of filter medium 4, bringing it in contact with a section of the filter medium 4 positioned at a minimum distance from said first edge, thereby creating a relatively cylindrical hollow shape and further pushing the created cylindrical hollow shape towards the edge at the opposite side from the first edge, until this edge is in contact with a layer of the relatively cylindrical shape.

Further, an electrically conductive layer 11 is provided onto said filter medium 4, preferably when said filter medium 4 is in an unrolled state. Consequently, when the filter medium 4 is rolled-up, the electrically conductive layer 11 is interposed between two adjacent layers of filter medium 4.

In the context of the present invention, it should be understood that the filter medium 4 has two surfaces: a bottom and a top surface. Further, said conductive layer 11 can be attached either on the top surface, as illustrated in figures 4 to 9 or, on the bottom surface (not shown).

The electrically conductive layer 11 has the property of capturing any static energy that might build up within the filter medium 4, such static energy being generated by the friction between the gas flow and the filter medium 4.

For reducing or even eliminating the risk of sparks being generated because of such static energy, the filter cartridge 1 further comprises an electrical connection means (not shown) configured to connect said electrically conductive layer 11 to a grounding.

In the context of the present invention a grounding should be understood as an electrical point of zero voltage or approximately zero voltage, through which an electrical charge can be discharged. It can be a direct physical connection to the safety Earthing system.

In an embodiment according to the present invention, the electrically conductive layer 11 is in contact with one of said end caps 5a or 5b.

For a simple layout, said electrical connection means are in direct contact with said end cap 5a or 5b that is in contact with the electrically conductive layer 11.

Said electrical connection means being created through one of the two end caps 5a or 5b by either bringing the electrically conductive layer 11 in physical contact with one of the two end caps 5a or 5b, or by using an electrically conductive wire connecting the electrically conductive layer 11 and one of the two end caps 5a or 5b, and further connecting the end cap 5a or 5b to the grounding.

Preferably, the end cap 5a or 5b to which the electrically conductive layer 11 is connected, is made from a material allowing an electrical current to flow therethrough.

Another possibility of creating the electrical connection is to insert an electrically conductive wire through one of said two end caps 5a or 5b, said electrically conductive wire being brought at one end in direct contact with said electrically conductive layer 11 and at the other end being further connected to the grounding.

Yet another possibility is to attach an electrically conductive wire onto the electrically conductive layer 11, said electrically conductive wire being further guided towards the end cap 5, following its contour and preferably reaching the outer surface of the filter cartridge 1, where the connection to the grounding can be realized.

Said electrical connection means can also be realized by inserting an electrically conductive wire through the filter medium 4, said electrically conductive wire being brought in direct physical contact with the electrically conductive layer 11 and with said grounding.

Preferably, said electrically conductive layer 11 is permeable to gas.

The two end caps 5 can be manufactured from a material selected from a group comprising: any type of metal or plastic, ceramic, rubber, carbon, glass or any other type of material.

In an embodiment according to the present invention, said two end caps 5 are in the shape of a radial containment, in which the rolled-up filter medium 4 is received. Further, said radial containment can comprise a collar type of structure covering a minimum height, H1, of the filter medium 4 for securing said filter medium 4 therein, as illustrated in figure 3. The collar type of structure being preferably created at the level of both end caps 5a and 5b.

Alternatively, said radial containment can comprise means of securing said filter medium 4 through for example snap fitting, through hooks or by using a glue, or any other securing technique.

Preferably, but not limiting to, the filter medium 4 is cellulose based. Alternatively, said filter medium 4 can be selected from a group comprising: textile fibers, fiber glass, polycarbonate, geotextile fabrics, polyester mesh, bonded fibers or filaments, metal mesh, any type of mycroporous membranes, or any other type of material in a woven, nonwoven, knitted, pressed or foam state.

Preferably, the material from which the electrically conductive layer 11 is manufactured can be selected from a group comprising: copper, aluminum, iron, steel, silver, gold, platinum, brass, bronze, graphite, or any other material allowing a good electrical conductivity.

Depending on the type of gas said filter cartridge 1 is subjected to, said electrically conductive layer 11 can further comprise a protection coating, such that it can withstand any corrosive effects possibly generated by the chemical composition and/or typical temperatures of the gas.

Preferably, but not limiting thereto, said multi-layered filter medium 4 comprises an electrically conductive layer 11 between every two subsequent layers of filter medium 4, when said filter medium 4 is in a rolled-up state.

Since such filter cartridge 1 is preferably mounted within a compressor or vacuum pump 2, the gas flow entering through said gas inlet 6 is typically contaminated with liquid particles. Accordingly, such gas flow can comprise a mixture of gas and oil, it can further possibly comprise condensate and even small particulate matter. Due to the porosities of the filter medium 4, only clean gas is allowed to exit through said gas outlet 9, the liquid and possibly the particulate matter being retained by said filter medium 4.

In another embodiment of the present invention, the filter 10 can comprises a nozzle or a valve (not shown), preferably positioned on the housing 8, at the bottom section or relatively close to the bottom section of said housing 8. Such bottom section being understood as opposed the top section, when such a filter 10 is mounted within a compressor or vacuum pump 2 and in normal operational conditions.

Said nozzle or valve being used for extracting the liquid dripping from the filter medium 4, such liquid being possibly filtrated and recirculated within the compressor or vacuum pump 1, for sealing any possible gas leakages within the compressor or vacuum element or for lubricating any bearings comprised by the compressor or vacuum pump.

In the context of the present invention the compressor or vacuum pump 2 should be understood as the complete compressor or vacuum pump system, including the compressor or vacuum element, all the typical connection pipes and valves, the compressor unit or vacuum pump housing and possibly the motor driving the compressor or vacuum element.

In the context of the present invention, the compressor or vacuum element should be understood as the casing of the compressor or vacuum element in which the compression or vacuum process takes place by means of a rotor or through a reciprocating movement.

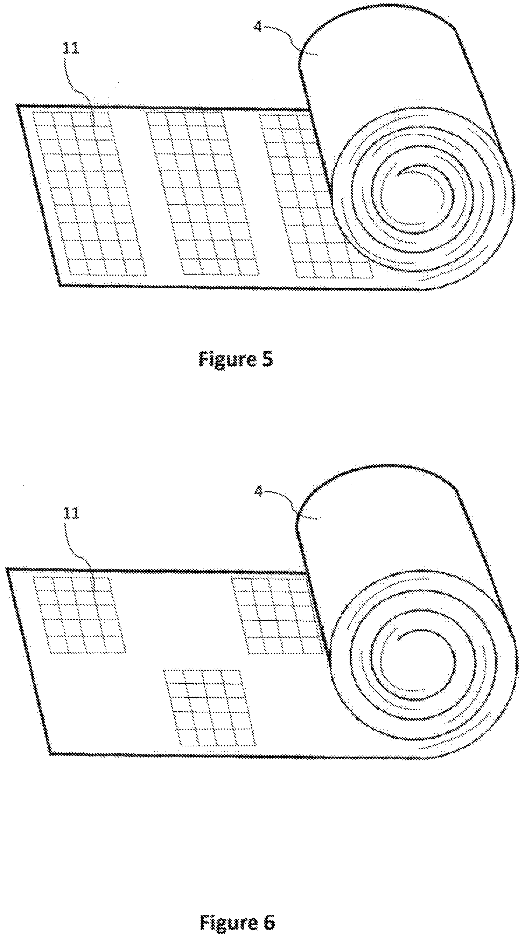

In an embodiment according to the present invention, said electrically conductive layer 11 can be in the shape of patches, as illustrated in figures 5 and 6, disposed or stretched on the surface of the filter medium 4 at a certain distance from each other. Such a distance being preferably chosen such that the efficiency of the discharge properties is not affected.

Preferably, but not limiting to, the patches are mounted on the filter medium 4 such that, when said filter medium 4 is in a rolled-up state, a patch of electrically conductive layer 11 would cover a part of the filter medium not covered or partially covered by another patch of electrically conductive layer 11 from a subsequent adjacent layer. By choosing such a mounting technique, a good discharge of the static energy is assured.

Said patches can be mounted through gluing or pressing, or the electrically conductive layer 11 can comprise a non-even or scratched surface, allowing the electrically conductive layer 11 to adhere to the filter medium 4.

Accordingly, the electrically conductive layer 11 covers at least a part of the surface of the filter medium 4 when said filter medium 4 is in an unrolled state, such as for example: more than 50% of the surface, more than 60% of the surface or more than 80% of the surface.

Preferably, but not limiting to, for an increased discharge capability and for ease of mounting, the electrically conductive layer 11 is mounted on approximately the entire surface of the filter medium 4 when said filter medium 4 is in an unrolled state.

It goes without saying that, in a rolled-up state, the filter medium 4 and the electrically conductive layer 11 define a spiral type of surface, whereby the center of said spiral is a hollow cylindrical space for allowing the gas flowing through said gas inlet 6 to reach any part of the height, H, of the filter cartridge 1.

According to the present invention, said electrically conductive layer 11 is in the shape of a woven net of electrically conductive wires, as illustrated in figures 4, 5 and 6. Said woven net being a continuous woven net, as shown in figure 4, or being in the shape of patches, as illustrated in figures 5 and 6.

The present invention should not be limited to such illustrative embodiments and any other shape or woven technique achieving the same effect should be considered as being covered by the present invention.

The density of the electrically conductive wires forming the woven net is preferably selected such that a droplet of liquid within the filter medium in a location where the electrically conductive layer 11 is mounted, enters in contact with at least one electrically conductive wire.

In another embodiment according to the present invention, the density of the electrically conductive wires forming the woven net can be selected such that an opening formed by adjacent electrically conductive wires is approximately equal or smaller than the typical diameter of a droplet of liquid.

In the context of the present invention, the typical diameter of a droplet should be understood as comprised within the interval between approximately 1 micrometre and approximately 300 micrometres and is dependent on the viscosity of the liquid. Tests have shown that the typical diameter of a droplet found in a filter cartridge 1 mounted within a compressor or vacuum pump 2 is of approximately 1 micrometre.

According to an alternative embodiment, as such not according to the invention, the electrically conductive layer 11 can be in the shape of electrically conductive wires oriented in different directions.

Preferably, for such a layout, the density of the electrically conductive wires is chosen in the same manner and under the same considerations as mentioned above for the case of the woven net.

Possibly, said woven net of electrically conductive wires and/or said electrically conductive wires oriented in different directions can further comprise a glue or a bounding agent applied on at least one side or surface, for facilitating the mounting procedure onto said filter medium 4. Alternatively, at least one surface of the electrically conductive wires forming said woven net or of said electrically conductive wires oriented in different directions is adapted to adhere to said filter medium 4.

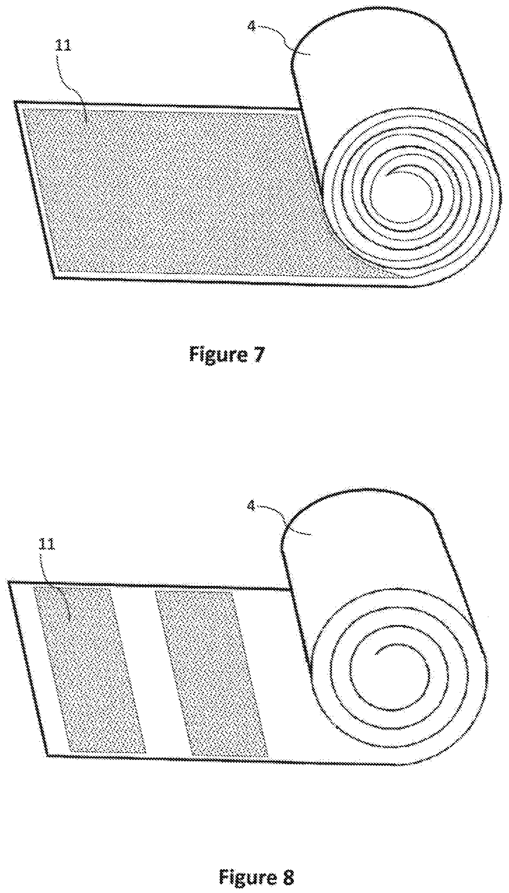

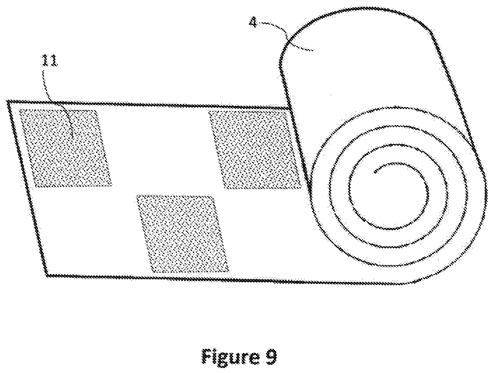

In another embodiment, as such not according to the present invention, said electrically conductive layer 11 comprises electrically conductive particles which have been sprayed forming an electrically conductive coating onto the filter medium 4, as illustrated in figures 7, 8 and 9. Said electrically conductive layer 11 being applied as a continuous coating surface, covering approximately the entire surface of the filter medium 4, when said filter medium 4 is in an unrolled state and as illustrated in figure 7, or covering a part of the surface of said filter medium 4, and being applied on patches, as illustrated in figures 8 and 9.

In the context of the present invention it should be understood that said patches can have a different shape or dimension than the examples illustrated in the accompanying drawings, and the present invention should not be limited to these illustrative embodiments.

Furthermore, the patches can be applied on the filter medium 4 such that, when said filter medium 4 is in a rolled state, a patch of electrically conductive layer 11 would cover a part of the filter medium 4 not covered or partially covered by another patch of electrically conductive layer 11 from an adjacent layer.

For an easy fixation of such electrically conductive particles, the electrically conductive coating comprises an adhesive component, for allowing said electrically conductive particles to adhere to said filter medium 4. By applying such a technique, a very easy and efficient manufacturing method is applied.

Preferably, the density of the electrically conductive particles from said electrically conductive coating is chosen such that a droplet of liquid is preferably in contact with two particles.

Further, said adhesive component is preferably an electrically conductive component.

Moreover, not only the filter cartridge 1 according to the present invention is very efficient and robust, but also the manufacturing method of such filter cartridge 1 is very simple. Accordingly, a layer of filter medium 4 is provided on the surface of which a conductive layer 11 is applied.

The structure comprising the filter medium 4 and the conductive layer 11 is rolled-up creating a relatively cylindrical shape with a hollow center.

Consequently, throughout the rolled-up structure, the electrically conductive layer 11 is preferably interposed between two adjacent layers of filter medium 4.

Further, the created cylindrical shape is secured between two end caps 5 and an electrical connection means is provided for connecting the electrically conductive layer 11 to a grounding.

Preferably, but not limiting thereto, the step of providing the electrical connection means comprises the step of attaching said electrical connection means after performing the step of rolling-up the filter medium 4.

In an embodiment according to the present invention, the method comprises the step of attaching said electrical connection means to one of the two end caps 5a or 5b.

Alternatively, the method comprises the step of attaching said electrical connection means directly to the electrically conductive layer 11 and further to the grounding through for example an electrical conductive layer disposed as previously defined in the present paper.

In an embodiment according to the present invention, depending on the preferred material used for the electrically conductive layer 11, the step of applying the electrically conductive layer 11 on at least a part of the surface of the filter medium 4 comprises the sub-step of attaching a woven net of electrically conductive wires on the entire or approximately the entire surface of the filter medium 4.

In an alternative embodiment, as such not according to the present invention, depending on the preferred material used for the electrically conductive layer 11, the step of applying the electrically conductive layer 11 on at least a part of the surface of the filter medium 4 comprises the sub-step selected from a group comprising: attaching electrically conductive wires oriented in different directions on the entire or approximately the entire surface of the filter medium 4, or spraying electrically conductive particles and forming an electrically conductive coating on the entire or approximately the entire surface of the filter medium 4.

In the context of the present invention, the step of securing the rolled-up filter medium 4 between the two end caps 5 should be understood as attaching said two end caps 5 through a technique selected from a group comprising: gluing, snap fitting, compressing the two end caps onto the filter medium 4, or attaching them through hooks, fasteners or clamps, or any other technique.

The present invention is further directed to a use of a filter cartridge 1 for filtering oil from compressed air in an oil injected compressor system.

The present invention is by no means limited to the embodiments described as an example and shown in the drawings, but such a filter cartridge 1 can be realized in all kinds of variants, without departing from the scope of the invention as defined in the claims.

## Claims

1. A filter cartridge for removing liquid from a gas stream, said filter cartridge (1) comprising:
- a filter medium (4) retained between two end caps (5), whereby one of said end caps (5a, 5b) comprises a gas inlet (6);
- said filter medium (4) being mounted in a rolled-up manner, such that the filter medium (4) shows a multi-layered structure;
- an electrically conductive layer (13) provided onto said filter medium (4);
**characterised in that**
said electrically conductive layer (11) is attached onto the filter medium (4) such that it is interposed between two adjacent layers of filter medium (4); **in that** the filter cartridge (1) further comprises an electrical connection means configured to connect said electrically conductive layer (11) to a grounding; and **in that** said electrically conductive layer (11) comprises a woven net of electrically conductive wires.

2. Filter cartridge according to claim 1, **characterised in that** the filter medium (4) is cellulose based.

3. Filter cartridge according to claim 1 or 2, **characterised in that** said electrically conductive layer (11) is in contact with one of said end caps (5a, 5b).

4. Filter cartridge according to claim 3, **characterised in that** said electrical connection means are in direct contact with said end cap (5a, 5b) that is in contact with the electrically conductive layer (11).

5. Filter cartridge according to any of the previous claims, **characterised in that** the electrically conductive layer (11) covers at least a part of the surface of the filter medium (4) when said filter medium (4) is in an unrolled state.

6. Filter cartridge according to any of the previous claims, **characterised in that** said multi-layered filter medium (4) comprises an electrically conductive layer (11) between every two subsequent layers of filter medium (4), when said filter medium (4) is in a rolled-up state.

7. Filter cartridge according to any of the previous claims, **characterised in that** the electrically conductive layer (11) is mounted on the entire or approximately the entire surface of the filter medium (4) when said filter medium (4) is in an unrolled state.

8. A filter comprising a housing (8) defining an internal space (7) in which a filter cartridge (1) is received,
- said filter cartridge (1) comprising:
• a filter medium (4) retained between two end caps (5), whereby one of said end caps (5a, 5b) comprises a gas inlet (6);
• said filter medium (4) being mounted in a rolled-up manner, such that the filter medium (A) shows a multi-layered structure;
• an electrically conductive layer (11) provided onto said filter medium (4);
- said housing (8) further comprising a gas outlet (9) within said internal space (7), between the cartridge (1) and a wall of the housing (8), whereby the gas inlet (6) is in fluid communication with said gas outlet (9);
**characterised in that** said electrically conductive layer (11) is attached onto the filter medium (4) such that it is interposed between two adjacent layers of filter medium (4); **in that** the filter cartridge (1) further comprises an electrical connection means configured to connect said electrically conductive layer (11) to a grounding; and **in that** said electrically conductive layer (11) comprises a woven net of electrically conductive wires.

9. A method for manufacturing a filter cartridge (1), the method comprising the following steps:
- providing a layer of filter medium (4);
- applying a conductive layer (11) on at least a part of the surface of the filter medium (4);
**characterised in that** the method further comprises the steps of:
- rolling-up the filter medium (4) and securing the rolled-up filter medium (4) between two end caps (5), such that the electrically conductive layer (11) is interposed between two adjacent layers of filter medium (4); and
- providing an electrical connection means connecting said electrically conductive layer (11) to a grounding,
and that applying the electrically conductive layer (11) on at least a part of the surface of the filter medium (4) comprises the sub-step of attaching a woven net of electrically conductive wires on the entire or approximately the entire surface of the filter medium (4).

10. Method according to claim 9, **characterised in that** providing an electrical connection means comprises the step of attaching said electrical connection means after performing the step of rolling-up the filter medium (4).

11. Method according to claims 9 or 10, **characterised in that** providing an electrical connection means comprises attaching said electrical connection means to one of the two end caps (5a, 5b).

## Patentansprüche

1. Filterpatrone zum Entfernen von Flüssigkeit aus einem Gasstrom, wobei die Filterpatrone (1) umfasst:
- ein Filtermedium (4), das zwischen zwei Endkappen (5) gehalten ist, wobei eine der Endkappen (5a, 5b) einen Gaseinlass (6) umfasst;
- wobei das Filtermedium (4) in einer aufgerollten Weise befestigt ist, sodass das Filtermedium (4) eine mehrschichtige Struktur zeigt;
- eine elektrisch leitfähige Schicht (13), die auf dem Filtermedium (4) bereitgestellt ist;
**dadurch gekennzeichnet, dass**
die elektrisch leitfähige Schicht (11) an dem Filtermedium (4) angebracht ist, sodass diese zwischen zwei angrenzenden Schichten des Filtermediums (4) eingefügt ist; und dadurch, dass die Filterpatrone (1) weiter ein elektrisches Verbindungsmittel umfasst, das konfiguriert ist, die elektrisch leitfähige Schicht (11) mit einer Erdung zu verbinden; und dadurch, dass die elektrisch leitfähige Schicht (11) ein gewebtes Netz von elektrisch leitfähigen Drähten umfasst.

2. Filterpatrone nach Anspruch 1, **dadurch gekennzeichnet, dass** das Filtermedium (4) auf Cellulose basiert ist.

3. Filterpatrone nach Anspruch 1 oder 2, **dadurch gekennzeichnet, dass** die elektrisch leitfähige Schicht (11) in Kontakt mit einer der Endkappen (5a, 5b) ist.

4. Filterpatrone nach Anspruch 3, **dadurch gekennzeichnet, dass** das elektrische Verbindungsmittel in direktem Kontakt mit der Endkappe (5a, 5b) ist, die in Kontakt mit der elektrisch leitfähigen Schicht (11) ist.

5. Filterpatrone nach einem der vorstehenden Ansprüche, **dadurch gekennzeichnet, dass** die elektrisch leitfähige Schicht (11) mindestens einen Teil der Fläche des Filtermediums (4) abdeckt, wenn sich das Filtermedium (4) in einem abgerollten Zustand befindet.

6. Filterpatrone nach einem der vorstehenden Ansprüche, **dadurch gekennzeichnet, dass** das mehrschichtige Filtermedium (4) eine elektrisch leitfähige Schicht (11) zwischen jeweils zwei aufeinanderfolgenden Schichten des Filtermediums (4) umfasst, wenn sich das Filtermedium (4) in einem aufgerollten Zustand befindet.

7. Filterpatrone nach einem der vorstehenden Ansprüche, **dadurch gekennzeichnet, dass** die elektrisch leitfähige Schicht (11) auf der gesamten oder ungefähr der gesamten Fläche des Filtermediums (4) befestigt ist, wenn sich das Filtermedium (4) in einem abgerollten Zustand befindet.

8. Filter, umfassend ein Gehäuse (8), das einen Innenraum (7) definiert, in dem eine Filterpatrone (1) aufgenommen ist,
- wobei die Filterpatrone (1) umfasst:
• ein Filtermedium (4), das zwischen zwei Endkappen (5) gehalten ist, wobei eine der Endkappen (5a, 5b) einen Gaseinlass (6) umfasst;
• wobei das Filtermedium (4) in einer aufgerollten Weise befestigt ist, sodass das Filtermedium (A) eine mehrschichtige Struktur zeigt;
• eine elektrisch leitfähige Schicht (11), die auf dem Filtermedium (4) bereitgestellt ist;
- wobei das Gehäuse (8) weiter einen Gasauslass (9) innerhalb des Innenraums (7) zwischen der Patrone (1) und einer Wand des Gehäuses (8) umfasst, wobei der Gaseinlass (6) in Fluidverbindung mit dem Gasauslass (9) ist;
**dadurch gekennzeichnet, dass** die elektrisch leitfähige Schicht (11) an dem Filtermedium (4) angebracht ist, sodass diese zwischen zwei angrenzenden Schichten des Filtermediums (4) eingefügt ist; und dadurch, dass die Filterpatrone (1) weiter ein elektrisches Verbindungsmittel umfasst, das konfiguriert ist, die elektrisch leitfähige Schicht (11) mit einer Erdung zu verbinden; und dadurch, dass die elektrisch leitfähige Schicht (11) ein gewebtes Netz von elektrisch leitfähigen Drähten umfasst.

9. Verfahren zum Herstellen einer Filterpatrone (1), wobei das Verfahren die folgenden Schritte umfasst:
- Bereitstellen einer Schicht eines Filtermediums (4);
- Aufbringen einer leitfähigen Schicht (11) auf mindestens einen Teil der Fläche des Filtermediums (4);
**dadurch gekennzeichnet, dass** das Verfahren weiter die Schritte umfasst von:
- Aufrollen des Filtermediums (4) und Sichern des aufgerollten Filtermediums (4) zwischen zwei Endkappen (5), sodass die elektrisch leitfähige Schicht (11) zwischen zwei angrenzenden Schichten des Filtermediums (4) eingefügt wird; und
- Bereitstellen eines elektrischen Verbindungsmittels, das die elektrisch leitfähige Schicht (11) mit einer Erdung verbindet,
und dadurch, dass das Aufbringen der elektrisch leitfähigen Schicht (11) auf mindestens einen Teil der Fläche des Filtermediums (4) den Unterschritt von einem Anbringen eines gewebten Netzes von elektrisch leitfähigen Drähten auf der gesamten oder ungefähr der gesamten Fläche des Filtermediums (4) umfasst.

10. Verfahren nach Anspruch 9, **dadurch gekennzeichnet, dass** das Bereitstellen eines elektrischen Verbindungsmittels den Schritt von einem Anbringen des elektrischen Verbindungsmittels nach einem Durchführen des Schritts des Aufrollens des Filtermediums (4) umfasst.

11. Verfahren nach Anspruch 9 oder 10, **dadurch gekennzeichnet, dass** das Bereitstellen eines elektrischen Verbindungsmittels ein Anbringen des elektrischen Verbindungsmittels an einer der zwei Endkappen (5a, 5b) umfasst.

## Revendications

1. Cartouche de filtration destinée à éliminer du liquide à partir d'un courant de gaz, ladite cartouche de filtration (1) comprenant :
- un matériau filtrant (4) qui est maintenu entre deux bouchons d'extrémité (5) ; dans lequel un desdits bouchons d'extrémité (5a, 5b) comprend une entrée (6) pour le gaz ;
- ledit matériau filtrant (4) étant monté dans un état enroulé d'une manière telle que le matériau filtrant (4) présente une structure multicouche :
- une couche électroconductrice (13) qui est prévue sur ledit matériau filtrant (4) ;
**caractérisée en ce que**
ladite couche électroconductrice (11) est fixée sur le matériau filtrant (4) d'une manière telle qu'elle vient s'intercaler entre deux couches adjacentes du matériau filtrant (4); **en ce que** la cartouche de filtration (1) comprend en outre un moyen de raccordement électrique qui est configuré pour raccorder ladite couche électroconductrice (11) à une mise à la terre; et **en ce que** ladite couche électroconductrice (11) comprend un filet tissé constitué par des fils électroconducteurs.

2. Cartouche de filtration selon la revendication 1, **caractérisée en ce que** le matériau filtrant (4) est à base de cellulose.

3. Cartouche de filtration selon la revendication 1 ou 2, **caractérisée en ce que** ladite couche électroconductrice (11) est mise en contact avec un desdits bouchons d'extrémité (5a, 5b).

4. Cartouche de filtration selon la revendication 3, **caractérisée en ce que** lesdits moyens de raccordement électrique sont mis directement en contact avec ledit bouchon d'extrémité (5a, 5b) qui est mis en contact avec la couche électroconductrice (11).

5. Cartouche de filtration selon l'une quelconque des revendications précédentes, **caractérisée en ce que** la couche électroconductrice (11) recouvre au moins une partie de la surface du matériau filtrant (4) lorsque ledit matériau filtrant (4) se trouve dans un état déroulé.

6. Cartouche de filtration selon l'une quelconque des revendications précédentes, **caractérisée en ce que** ledit matériau filtrant multicouche (4) comprend une couche électroconductrice (11) entre respectivement deux couches successives de matériau filtrant (4), lorsque ledit matériau filtrant (4) se trouve dans un état déroulé.

7. Cartouche de filtration selon l'une quelconque des revendications précédentes, **caractérisée en ce que** la couche électroconductrice (11) est montée sur la totalité ou sur approximativement la totalité de la surface du matériau filtrant (4), lorsque ledit matériau filtrant (4) se trouve dans un état déroulé.

8. Filtre comprenant un boîtier (8) qui définit un espace interne (7) dans lequel vient se loger une cartouche de filtration (1),
- ladite cartouche de filtration (1) comprenant :
• un matériau filtrant (4) qui est maintenu entre deux bouchons d'extrémité (5); dans lequel un desdits bouchons d'extrémité (5a, 5b) comprend une entrée (6) pour le gaz ;
• ledit matériau filtrant (4) étant monté dans un état enroulé d'une manière telle que le matériau filtrant (4) présente une structure multicouche ;
• une couche électroconductrice (13) qui est prévue sur ledit matériau filtrant (4) ;
- ledit boîtier (8) comprenant en outre une sortie (9) pour le gaz au sein dudit espace interne (7), entre la cartouche (1) et une paroi du boîtier (8); dans laquelle l'entrée (6) pour le gaz est mise en communication par fluide avec ladite sortie (9) pour le gaz;
**caractérisé en ce que** ladite couche électroconductrice (11) est fixée sur le matériau filtrant (4) d'une manière telle qu'elle vient s'intercaler entre deux couches adjacentes du matériau filtrant (4) ; **en ce que** la cartouche de filtration (1) comprend en outre un moyen de raccordement électrique qui est configuré pour raccorder ladite couche électroconductrice (11) à une mise à la terre ; et **en ce que** ladite couche électroconductrice (11) comprend un filet tissé constitué par des fils électroconducteurs.

9. Procédé destiné à la fabrication d'un cartouche de filtration (1), le procédé comprenant les étapes suivantes au cours desquelles :
- on procure une couche d'un matériau filtrant (4) ;
- on applique une couche conductrice (11) sur au moins une partie de la surface du matériau filtrant (4) ;
**caractérisé en ce que** le procédé comprend en outre les étapes au cours desquelles :
- on enroule le matériau filtrant (4) et on fixe le matériau filtrant enroulé (4) entre deux bouchons d'extrémité (5), d'une manière telle que la couche électroconductrice (11) vient s'intercaler entre deux couches adjacentes du matériau filtrant (4) ; et
- on procure un moyen de raccordement électrique qui raccorde ladite couche électroconductrice (11) à une mise à la terre ;
et **en ce que** le fait d'appliquer la couche électroconductrice (11) sur au moins une partie de la surface du matériau filtrant (4) comprend l'étape intermédiaire qui consiste à fixer un filet tissé constitué par des fils électroconducteurs sur la totalité ou sur approximativement la totalité de la surface du matériau filtrant (4).

10. Procédé selon la revendication 9, **caractérisé en ce que** le fait de procurer un moyen de raccordement électrique comprend l'étape au cours de laquelle on fixe ledit moyen de raccordement électrique après la mise en œuvre de l'étape au cours de laquelle on enroule le milieu filtrant (4).

11. Procédé selon la revendication 9 ou 10, **caractérisé en ce que** le fait de procurer un moyen de raccordement électrique comprend le fait de fixer ledit moyen de raccordement électrique à un des deux bouchons d'extrémité (5a, 5b).
